# EUROPÄISCHE PATENTANMELDUNG

(11) **EP 4 279 767 A1**
(43) Veröffentlichungstag der Anmeldung: **22.11.2023**
(21) Anmeldenummer: 22174603.5
(22) Anmeldetag: 20.05.2022
(51) Int. Cl.: F16H 57/04

(54) **GETRIEBE MIT ÖLAUFFANGBEHÄLTER**

(71) Anmelder: Flender Industriegetriebe GmbH, 09322 Penig (DE)
(72) Erfinder: MAHN, Gunter, 09322 Penig (DE)
(74) Vertreter: Michalski Hüttermann & Partner Patentanwälte mbB

(57) **Zusammenfassung**

Die Erfindung betrifft ein Getriebe 10, mit einer Getriebegehäusestruktur 12, mehreren in der Getriebegehäusestruktur 12 aufgenommenen und zumindest teilweise miteinander in einem Verzahnungseingriff stehenden und um eine jeweilige Rotationsachse R_{A} sich drehenden Zahnrädern 14, zumindest einem stirnseitig an einem der Zahnräder 14 angeordneten Ölauffangbehälter 20. Der Ölauffangbehälter 20 weist ein der Stirnseite des Zahnrades 20 zugewandtes und in einer Wechselwirkung stehendes Abstreiferelement 22 auf. Das Abstreiferelement 22 bildet eine seitlich der Stirnseite des Zahnrades 14 liegende und mit einem Auffangbereich 24 des Ölauffangbehälters 20 fluidtechnisch verbundene Ausnehmung 26 aus. Der Ölauffangbehälter 20 kann als kanalförmiges Bauteil ausgeführt sein. Das Bauteil kann geometrisch sehr einfach gestaltet sein. Der Ölauffangbehälter 20 kann sich in einem oder mehreren Ölleitblechen 34 fortsetzen. Dies führt zu niedrigen Fertigungskosten.

## Beschreibung

Die Erfindung betrifft Getriebe, mit einer Getriebegehäusestruktur, mehreren in der Getriebegehäusestruktur aufgenommenen und zumindest teilweise miteinander in einem Verzahnungseingriff stehenden und um eine jeweilige Rotationsachse sich drehenden Zahnrädern, zumindest einem stirnseitig an einem der Zahnräder angeordneten Ölauffangbehälter. Der Ölauffangbehälter weist ein der Stirnseite des Zahnrades zugewandtes und in einer Wechselwirkung stehendes Abstreiferelement auf.

Bei Anwendungen, in denen derartige Getriebe zum Einsatz kommen, kann ein Absenken des Ölstandes auf ein niedriges Niveau erforderlich sein. Grund für ein solches Absenken kann beispielsweise die Verwendung von Labyrinthdichtungen oder das Absenken des Ölstandes zur Wirkungsgradoptimierung sein. Bei einem abgesenkten Ölstand ist eine Versorgung von Bauteilen wie Lager und Verzahnungen mit Schmieröl ausschließlich durch Tauch- bzw. Ölbadschmierung nicht mehr gegeben. Es sind weitere Maßnahmen zur Schmierölversorgung erforderlich, wobei beispielsweise die Anwendung einer Druckschmierung mittels Ölpumpen oder Ölsammel- und Ölleitblechen in Frage kommen. Unter bestimmten Betriebsbedingungen, z.B. niedrige Temperaturen oder niedrige Umfangsgeschwindigkeiten, liefern übliche Ölleitbleche, welche durch die Drehbewegung der Bauteile im Getriebe umherspritzendes Öl Spritzöl aufnehmen und zu den Schmierstellen leiten, keine ausreichende Ölversorgung, da sie nicht in der Lage sind genug Öl zu Lagern und Verzahnungen zu leiten. Alternativ können zum Sammeln von Spritzöl Ölabstreifer eingesetzt werden. Hierbei wird von einem rotierenden Bauteil, z.B. einer Scheibe oder einem Zahnrad, welches teilweise im Ölsumpf taucht, durch Berührung oder räumliche Nähe eines Ölabstreifers im oberen Bereich der rotierenden Bauteile Öl abgenommen und zu den Schmierstellen weitergeleitet. Ein Abstreiferelement ist aus der EP 2 505 877 A1 bekannt. Es besteht ein ständiges Bedürfnis Abstreiferelemente für die genannten Zwecke zu verbessern.

Es ist die Aufgabe der Erfindung Maßnahmen aufzuzeigen, die es ermöglichen ein verbessertes Abstreiferelement bereitzustellen.

Die Lösung der Aufgabe erfolgt durch ein Getriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Getriebe, mit einer Getriebegehäusestruktur, mehreren in der Getriebegehäusestruktur aufgenommenen und zumindest teilweise miteinander in einem Verzahnungseingriff stehenden und um eine jeweilige Rotationsachse sich drehenden Zahnrädern, zumindest einem stirnseitig an einem der Zahnräder angeordneten Ölauffangbehälter. Der Ölauffangbehälter weist ein der Stirnseite des Zahnrades zugewandtes und in einer Wechselwirkung stehendes Abstreiferelement auf, wobei das Abstreiferelement eine seitlich der Stirnseite des Zahnrades liegende und mit einem Auffangbereich des Ölauffangbehälters fluidtechnisch verbundene Ausnehmung ausbildet.

In dem Getriebegehäuse können Stirnräder und/oder Kegelstimräder über entsprechende Wellen aufgenommen sein. Die Wellen können über in den Gehäuseöffnungen aufgenommene Lagerungen drehbar gelagert sein. Die Gehäuseöffnungen sind zweckmäßigerweise als runde Bohrungen ausgeführt. Als Lagerungen können beispielsweise Wälzlager eingesetzt werden. Das Getriebegehäuse kann bereichsweise oder überwiegend dünnwandig ausgeführt werden, wobei der hierdurch entstehende Verlust an Steifigkeit durch die Rippenstruktur an den Innenseiten der Seitenwandungen zumindest ausgeglichen wird.

Der Ölauffangbehälter kann als kanalförmiges Bauteil ausgeführt sein. Das Bauteil kann geometrisch sehr einfach gestaltet sein, wobei insbesondere die Fertigung aus einem Blechwerkstoff vorteilhaft ist. Der Ölauffangbehälter kann sich in einem oder mehreren Ölleitblechen fortsetzen, so das Öl über die Ölleitbleche zu den jeweils vorgesehenen Ölabgabestellen geleitet werden kann, nachdem sich das Öl in dem Ölauffangbehälter gesammelt hat. Die Ausgestaltung des Ölauffangbehälters und weiteren Ölleitblechen als ein Bauteil führt zu niedrigen Fertigungskosten. Die Ölleitbleche sind zweckmäßigerweise mit einem Gefälle, bezogen auf eine horizontale Richtung in einer Betriebssituation, in dem Getriebegehäuse angeordnet, so dass das Öl lediglich infolge der herrschenden Schwerkraft zu den Ölabgabestellen fließt. Das Abstreiferelement befindet sich bezogen auf eine vertikale Richtung zweckmäßigerweise an dem höchsten Punkt des Ölauffangbehälter einschließlich Ölleitbleche. Es kann auf den Einsatz beispielsweise von Öldruckpumpen verzichtet werden.

Das Abstreiferelement ist bevorzugt als separates Bauteil ausgeführt, welches über geeignete Befestigungsmittel an dem Ölauffangbehälter gehalten ist. Insbesondere ist das Abstreiferelement lösbar an dem Ölauffangbehälter gehalten, so dass es beispielsweise in einem Wartungsfall ausgetauscht werden kann. Das Abstreiferelement kann als flache Platte ausgeführt sein. In einer Betriebssituation ist das Abstreiferelement der Stirnseite des Zahnrades weitestgehend angenähert oder berührt diese. In einer Betriebssitations schöpft das Abstreiferelement das auf der Stirnseite des Zahnrades durch die Ölviskosität gehaltene Öl ab, so dass das Öl von dem Ölauffangbehälter aufgenommen werden bzw. sich in diesem sammeln kann.

Die Ausnehmung des Abstreiferelements liegt in einer axial seitlichen Richtung in einer Parallelebene zu der Ebene der Stirnseite des Zahnrades. Die Angabe axial seitlich kann auch als in axialer Richtung versetzt verstanden werden, wobei die Richtungsangabe jedenfalls bezüglich der Rotationsachse des sich drehenden Zahnrades verstanden wird. In einem Fall, in dem das Abstreiferelement und die Stirnseite des Zahnrades sich in einer Betriebssituation kontaktieren, kommen die Parallelebene der Ausnehmung und die Stirnseite des Zahnrades zu Deckung. Die Ausnehmung des Abstreiferelements ist strömungsgünstig gestaltet, so die Ausnehmung eine möglichst große Ölmenge von der Stirnseite des jeweiligen Zahnrades abschöpft und dem Ölauffangbehälter zuführt. Die Ausnehmung öffnet sich zweckmäßigerweise in Umfangsrichtung des Zahnrades und zwar entgegen der in einer Betriebssituation vorgesehenen Drehrichtung des Zahnrades. In einer bevorzugten Ausgestaltung ist vorgesehen, dass zumindest ein Schenkel der Ausnehmung im Wesentlichen tangential zu der Stirnseite des Zahnrades ausgerichtet ist. Insbesondere kann es sich hierbei um den radial äußeren Schenkel der Ausnehmung handeln. In einer insbesondere für einen bidirektionalen Betrieb des Getriebes bevorzugte Ausgestaltung ist vorgesehen, dass das Abstreiferelement zwei und in entgegensetzte Umfangsrichtungen gerichtete Ausnehmungen ausbildet. Hierdurch ist in beiden Drehrichtungen des Zahnrades gleichermäßen ein Abschöpfen von Öl von der Stirnfläche des jeweiligen Zahnrades gewährleistet. Bevorzugt ist hierbei insbesondere, dass die zwei Ausnehmungen bezüglich ihrer Anordnung auf dem Abstreiferelement im Wesentlichen symmetrisch ausgebildet sind. Die Ausnehmung kann insbesondere einen trichterförmigen, V-förmigen, U-förmigen oder W-förmigen Umriss ausbilden.

In einer zudem bevorzugten Ausgestaltung ist vorgesehen, dass die Ausnehmung über eine seitlich des Auffangbereichs ausgebildete Öffnung mit dem Auffangbereich des Ölauffangbehälters fluidtechnisch verbunden ist. Hierdurch ist sichergestellt, dass das von der Stirnfläche des Zahnrades abgeschöpftes Öl sich zunächst in dem Auffangbereich sammeln kann und dann weitergeführt wird. Die Öffnung kann in Abhängigkeit des Anwendungsfalls eckig, rund, oval oder elliptisch ausgebildet sein.

In einer weiterhin bevorzugten Ausgestaltung weist das Abstreiferelement auf seiner der Stirnseite des Zahnrades zugewandten Außenfläche eine Gleitbeschichtung auf. Eine Gleitbeschichtung lässt während eines Betriebes insbesondere einen verschleißarmen Kontakt zwischen dem Ölauffangbehälter bzw. dem Abstreiferelement und der Stirnseite des Zahnrades zu. In konkreter Ausgestaltung kann die Gleitbeschichtung durch einen Leichtmetallwerkstoff, einen Gleitlagerwerkstoff oder einen Kunststoffwerkstoff gebildet sein. Bevorzugte Möglichkeiten die Gleitbeschichtung aufzubringen bestehen darin, diese aufzudampfen, aufzukaschieren oder als dezidiertes Beschichtungselement aufzubringen. Bei der Ausführung eines dezidierten Beschichtungselementes besteht zudem die Möglichkeit, das Beschichtungselement mit einer der Stirnseite des Zahnrades zugewandten Oberflächenstrukturierung zu versehen. Insbesondere kann die Oberflächenstrukturierung derart konturiert sein, dass die Förderwirkung bzgl. des Öls positiv beeinflusst wird und eine Dichtfunktion im Bereich um die Öffnung herum zu dem Auffangbereich erzeugt wird.

In einer desweiteren bevorzugten Ausgestaltung weist der Auffangbereich des Ölauffangbehälters bodennah zumindest eine Ölablaufbohrung auf. Der Begriff bodennah kann auch als bodenseitig verstanden werden, d.h. die Ölablaufbohrung kann beispielsweise in einem Boden des Auffangbereichs oder auch in unteren Bereich einer Seitenwandung des Auffangbereichs vorgesehen sein. Durch die Ölablaufbohrung lässt sich funktionell eine dynamische Ölstandsabsenkung während eines Betriebs des Getriebes realisieren. Hierbei stellt sich während des Betriebs in dem Auffangbereich des Ölauffangbehälters ein Ölstand bzw. Ölniveau ein, das über dem Ölstand bzw. Ölniveau während Stillstand des Getriebes liegt. Die Ölablaufbohrung ermöglicht im Stillstand ein Ablaufen des Öls aus dem Auffangbereich, wohingegen während des Betriebs ständig Öl in den Auffangbereich nachgefördert wird und über die Ölablaufbohrung nur einem vernachlässigenden Teil ablaufen kann. Während des Betriebs sinkt folglich der Ölstand außerhalb des Auffangbereichs und führt zu einer Verringerung der Plansch- und Reibungsverluste. Während eines Stillstands steigt der Ölstand wieder auf die für ein Anlaufen des Getriebes erforderliche Höhe an. Hiermit ist es beispielsweise möglich Wälzlager beim Anlaufen zumindest teilweise im Öl eintauchen zu lassen, sie während des Betriebes aber nur mit Spritzöl bzw. über den Ölauffangbehälter und die Ölleitbleche zu versorgen.

Die Aufgabe wird ferner gelöst durch ein Verfahren zum Abstreifen von Schmieröl, bei dem ein Getriebe mit den zuvor beschriebenen Ausgestaltungsmöglichkeiten bereitgestellt wird und während eines Betriebs des Getriebes der Ölauffangbehälter über das Abstreiferelement von einer Stirnfläche eines Zahnrades abstreift.

Die Lösung der gestellten Aufgabe erfolgt zudem durch eine Industrieapplikation umfassend ein Antriebsmittel, das drehmomentübertragend mit einem Getriebe verbunden ist, wobei das Getriebe drehmomentübertragend mit einer mechanischen Anwendung gekoppelt ist, wobei das Getriebe mit den zuvor beschriebenen Ausgestaltungsmöglichkeiten ausgebildet ist.

Auch wird die Aufgabe gelöst durch eine Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen eines Getriebes wie zuvor beschriebenen, wobei die Datenpakete dazu hergerichtet sind bei einer Verarbeitung durch eine Datenverarbeitungseinrichtung eine Herstellung des Ölauffangbehälters, insbesondere durch 3D-Druck mittels eines 3D-Druckers, und/oder eine Simulation der Funktionsweise des Getriebes durchzuführen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine perspektivische Ansicht eines Getriebes;
Fig. 2: eine Darstellung der Einzelheiten Zahnrad und Ölauffangbehälter für das Getriebe aus Fig. 1;
Fig. 3a), 3b): einen Ölauffangbehälter in weiteren Einzelheiten;
Fig. 4: ein teildurchsichtiges Zahnrad und einen Ölauffangbehälter und
Fig. 5: eine schematische Darstellung einer Industrieapplikation mit einem Ölauffangbehälter.

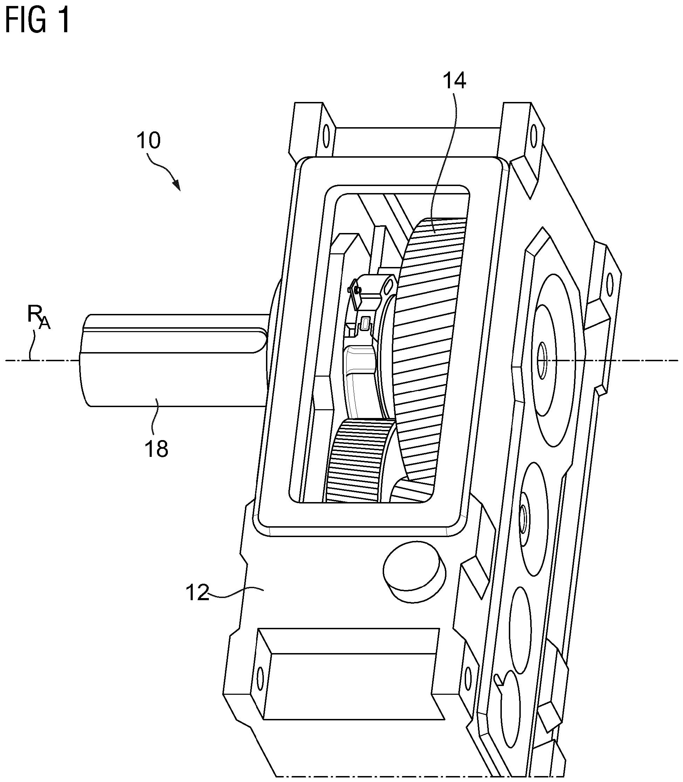

Die Figur 1 zeigt ein Getriebe 10 mit einem Getriebegehäuse 12 in einer perspektivischen Draufsicht. Ein Gehäusedeckel ist nicht dargestellt, so dass das Innere des Getriebes zu erkennen ist. Im Inneren des Getriebes 10 sind mehrere Zahnräder 14 um jeweilige Rotationsachsen R_{A} drehbar gehalten, wobei vorliegend lediglich ein Zahnrad und die jeweilige Rotationsache mit den Bezugszeichen 14 und R_{A} versehen sind. Zudem ist eine mit dem Zahnrad in einer Abtriebsverbindung stehende Welle 18 dargestellt, wobei es sich je nach Drehmomentfluss um eine Antriebswelle oder eine Abtriebswelle handeln kann. In dem Getriebegehäuse 12 ist ein Volumen von Schmieröl aufgenommen, über das sowohl eine Schmierung der im Betrieb ineinandergreifenden Verzahnungen als auch von Lagerungen erfolgen kann. Die Schmierung erfolgt, indem zumindest eines der umlaufenden Zahnräder in das unten im Getriebegehäuse 10 in einem Ölsumpf gehaltene Schmieröl eintauchen und hierüber eine Weitergabe des Schmieröls an den oder die Verzahnungspartner erfolgt. Zudem wird durch die Drehung der Zahnräder das Schmieröl von diesen abgeschleudert, so dass es als Spritzöl weitere Bauteil in dem Getriebegehäuse 12 schmieren kann.

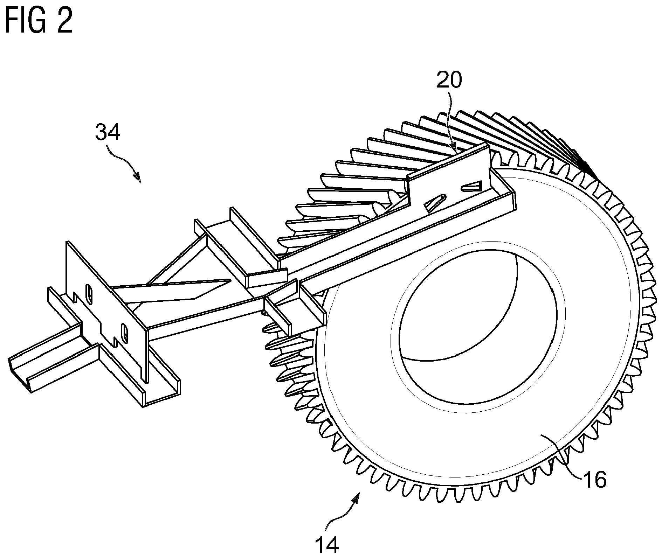

Die Figur 2 zeigt eine Darstellung von Einzelheiten, nämlich des Zahnrades 14 und von einem Ölauffangbehälter 20. Der Ölauffangbehälter 20 ist vorliegenden in einem Bauteil zusammen mit Ölleitblechen 34 zusammengefasst. Der Ölauffangbehälter 20 und die Ölleitblechen 34 sind in geeigneter Weise innerhalb der Getriebegehäusestruktur 12 gehalten, beispielsweise gegenüber einer Innenwandung, wobei hierauf vorliegend nicht näher eingegangen werden muss. Das Zahnrad 14 weist axial beidseitig jeweilige Stirnseiten 16 auf. Der Ölauffangbehälter 20 ist stirnseitig an dem Zahnrad 14 angeordnet. Im Wesentlichen ist der Ölauffangbehälter 20 in einem radial oberen Bereich des Zahnrades 14 angeordnet.

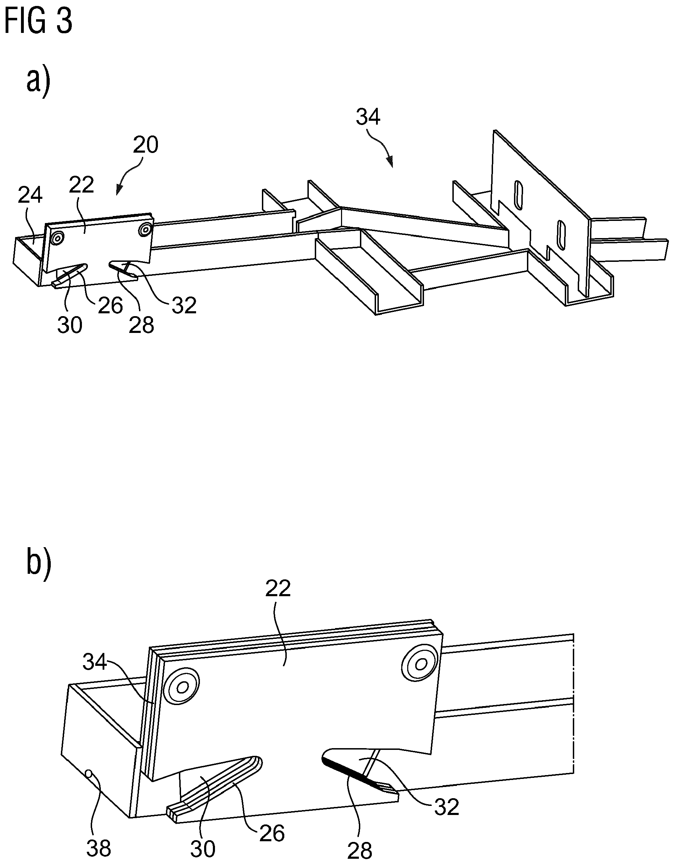

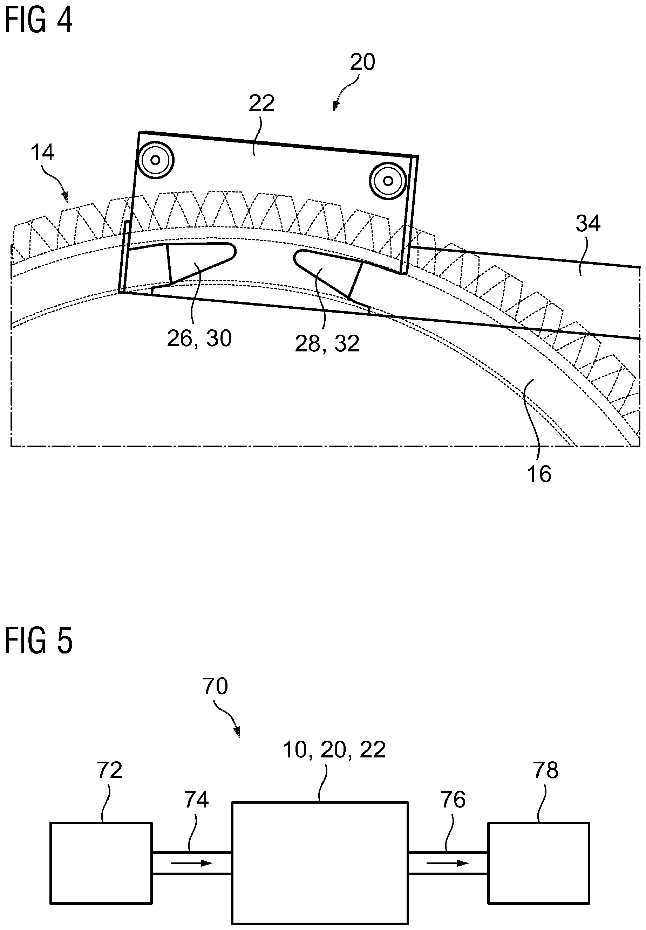

Die Figur 3 zeigt in der Darstellung a) eine Einzelheit des integrierten Bauteils bestehend aus Ölauffangbehälter 20 und Ölleitblechen 34 und in der Darstellung b) eine Einzelheit des Ölauffangbehälters 20. In beiden Darstellungen ist der Ölauffangbehälter 20 von der Seite gezeigt, die in einem Betrieb der Stirnseite 16 des Zahnrades 14 zugewandt ist. In der Figur 4 ist bei teildurchsichtigem Zahnrad 14 dargestellt, wie der Ölauffangbehälter 20 an der Stirnseite 16 des Zahnrades 14 angeordnet ist. Die Figuren 3 und 4 werden nachfolgend unter gemeinsamer Bezugnahme beschrieben.

Der Ölauffangbehälter 20 ist stirnseitig an dem Zahnräder 14 angeordnet, wobei der Ölauffangbehälter 20 insbesondere ein Abstreiferelement 22 aufweist, das mit der Stirnseite 16 des Zahnrades 14 derart in einer Wechselwirkung steht, dass es in einer Betriebssituation Öl von der Stirnseite abschöpft. Eine Betriebssituation ist durch eine Drehung des Zahnrades 14 um die Rotationsachse R_{A} gekennzeichnet. Das Abstreiferelement 22 bildet eine bevorzugt V-förmige und mit einem Auffangbereich 24 des Ölauffangbehälters 20 fluidtechnisch verbundene Ausnehmung 26 aus. Das Abstreiferelement 22 ist vorliegend im Wesentlichen plattenförmig ausgeführt und überragt den Auffangbereich 24 höhenmäßig bzw., bezogen auf das Zahnrad 14 bezogen, in radialer Richtung. Vorliegend ist das Abstreiferelement 22 bezüglich einer Mittellinie symmetrisch ausgeführt und bildet eine zweite Ausnehmung 28 aus, so dass sich die beschriebene Wechselwirkung mit der Stirnseite 16 des Zahnrades 14 in beiden möglichen Drehrichtungen des Zahnrades 14 einstellt. Die beiden Ausnehmungen 26, 28 sind bei dieser Ausführung folglich in entgegengesetzte Umfangsrichtungen orientiert. Der Auffangbereich 24 bildet in einer seitlichen Wandung eine Öffnung 30, und bei bidirektionaler Ausführung eine zweite Öffnung 32, aus. Die Öffnungen 30, 32 finden ihr Pendant jeweils in einer der Ausnehmungen 26, 28 des Abstreiferelements 22, so dass die Ausnehmungen 26, 28 über die Öffnungen 30, 32 fluidtechnisch mit dem Ölauffangbehälter 20 verbunden sind und während des Betriebs abgeschöpftes Öl in den Ölauffangbehälter 20 überfließen kann. Der Auffangbereich 24 kann zudem noch eine Ölablaufbohrung 38 aufweisen, die vorliegend in einem unteren Bereich einer Seitenwandung vorgesehen ist.

Alternativ kann die Ölablaufbohrung auch in einem Boden des Auffangbereichs 24 ausgebildet sein, was vorliegend aber nicht dargestellt ist.

Die Ausnehmungen 26, 28 sind vorliegend derart gestaltet, dass zumindest ein Schenkel 36 der Ausnehmung 26 im Wesentlichen tangential zu der Stirnseite 16 des Zahnrades 14 ausgerichtet ist. Die Öffnungen 30, 32 können eckig, rund, oval oder elliptisch ausgebildet sein. Das Abstreiferelement 22 kann auf seiner der Stirnseite 16 des Zahnrades 14 zugewandten Außenfläche eine Gleitbeschichtung 32 aufweist. Die Gleitbeschichtung 32 kann durch einen Leichtmetallwerkstoff, einen Gleitlagerwerkstoff oder einen Kunststoffwerkstoff gebildet sein.

Die Figur 5 zeigt einen schematischen Aufbau einer Ausführungsform der beanspruchten Industrie-Applikation 70, die eine Antriebseinheit 72 umfasst, die als Elektromotor, Verbrennungsmotor oder Hydraulikmotor ausgebildet sein kann. Durch die Antriebseinheit 72 wird über eine Antriebswelle 74 eine Antriebsleistung bereitgestellt, die über ein Getriebe 10 mit einer Getriebegehäusestruktur 12 und eine Abtriebswelle 76 zu einer Abtriebseinheit 78 übertragen werden kann. Das Getriebe 10 weist einen wie zuvor beschriebenen Ölauffangbehälter 20 mit einem Abstreiferelement 22.

### Bezugszeichenliste

- 10: Getriebe
- 12: Getriebegehäusestruktur
- 14: Zahnrad
- 16: Stirnseite
- 18: Welle
- 20: Ölauffangbehälter
- 22: Abstreiferelement
- 24: Auffangbereich
- 26: Ausnehmung
- 28: Ausnehmung
- 30: Öffnung
- 32: Öffnung
- 34: Gleitbeschichtung
- 36: Schenkel
- 38: Ölablaufbohrung
- 70: Industrieapplikation
- 72: Antriebseinheit
- 74: Antriebswelle
- 76: Abtriebswelle
- 78: Abtriebseinheit

## Patentansprüche

1. Getriebe (10), umfassend
eine Getriebegehäusestruktur (12),
mehrere in der Getriebegehäusestruktur (12) aufgenommene und zumindest teilweise miteinander in einem Verzahnungseingriff stehende und um eine jeweilige Rotationsachse A_{R} sich drehende Zahnräder (14),
zumindest einen stirnseitig an einem der Zahnräder (14) angeordneten Ölauffangbehälter (20), wobei der Ölauffangbehälter (20) ein der Stirnseite (16) des Zahnrades (14) zugewandtes und in einer Wechselwirkung stehendes Abstreiferelement (22) aufweist,
**dadurch gekennzeichnet, dass**
das Abstreiferelement (22) eine seitlich der Stirnseite (16) des Zahnrades (14) liegende und mit einem Auffangbereich (24) des Ölauffangbehälters (20) fluidtechnisch verbundene Ausnehmung (26) ausbildet.

2. Getriebe (10) nach Anspruch 1, **dadurch gekennzeichnet, dass** zumindest ein Schenkel (36) der Ausnehmung (26) im Wesentlichen tangential zu der Stirnseite (16) des Zahnrades (14) ausgerichtet ist.

3. Getriebe (10) nach Anspruch 1 oder 2, **dadurch gekennzeichnet, dass** das Abstreiferelement (22) zwei und in entgegensetzte Umfangsrichtung gerichtete Ausnehmungen (28) ausbildet.

4. Getriebe (10) nach Anspruch 3, **dadurch gekennzeichnet, dass** die zwei Ausnehmung (26, 28) bezüglicher ihrer Anordnung auf dem Abstreiferelement (22) im Wesentlichen symmetrisch ausgebildet sind.

5. Getriebe (10) nach einem der Ansprüche 1 bis 4, **dadurch gekennzeichnet, dass** die Ausnehmung (28) einen trichterförmigen, V-förmigen, U-förmigen oder W-förmigen Umriss hat.

6. Getriebe (10) nach einem der Ansprüche 1 bis 5, **dadurch gekennzeichnet, dass** die Ausnehmung (26, 28) über jeweils eine seitlich des Auffangbereichs (24) ausgebildete Öffnung (30, 32) mit dem Auffangbereich (24) des Ölauffangbehälters (20) fluidtechnisch verbunden ist.

7. Getriebe (10) nach Anspruch 6, **dadurch gekennzeichnet, dass** die Öffnung (30, 32) eckig, rund, oval oder elliptisch ausgebildet ist.

8. Getriebe (10) nach einem der Ansprüche 1 bis 7, **dadurch gekennzeichnet, dass** das Abstreiferelement (22) auf seiner der Stirnseite (16) des Zahnrades (14) zugewandten Außenfläche eine Gleitbeschichtung (32) aufweist.

9. Getriebe (10) nach Anspruch 8, **dadurch gekennzeichnet, dass** die Gleitbeschichtung (32) durch einen Leichtmetallwerkstoff, einen Gleitlagerwerkstoff oder einen Kunststoffwerkstoff gebildet ist.

10. Getriebe (10) nach Anspruch 8 oder 9, **dadurch gekennzeichnet, dass** die Gleitbeschichtung (32) aufgedampft, aufkaschiert oder als dezidiertes Beschichtungselement aufgebracht ist.

11. Getriebe (10) nach Anspruch 10, **dadurch gekennzeichnet, dass** die als dezidiertes Beschichtungselement aufgebrachte Gleitbeschichtung (32) eine der Stirnseite des Zahnrades (14) zugewandte Oberflächenstrukturierung ausbildet.

12. Getriebe (10) nach einem der Ansprüche 1 bis 11, **dadurch gekennzeichnet, dass** der Auffangbereich (24) des Ölauffangbehälters (20) bodennah zumindest eine Ölablaufbohrung (38) aufweist.

13. Verfahren zum Abstreifen von Schmieröl, bei dem ein Getriebe (10) nach einem der Ansprüche 1 bis 12 bereitgestellt wird und während eines Betriebs des Getriebes (10) der Ölauffangbehälter (20) über das Abstreiferelement (22) von einer Stirnfläche (16) eines Zahnrades (14) abstreift.

14. Industrieapplikation (70) umfassend ein Antriebsmittel (72), das drehmomentübertragend mit einem Getriebe (10) verbunden ist, wobei das Getriebe (10) drehmomentübertragend mit einer mechanischen Anwendung (78) gekoppelt ist, **dadurch gekennzeichnet, dass** das Getriebe (10) nach einem der Ansprüche 1 bis 12 ausgebildet ist.

15. Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen eines Getriebes (10) nach einem der Ansprüche 1 bis 12 vorgesehenen Ausgestaltungen, wobei die Datenpakete dazu hergerichtet sind bei einer Verarbeitung durch eine Datenverarbeitungseinrichtung eine Herstellung des Ölauffangbehälters (20), insbesondere durch 3D-Druck mittels eines 3D-Druckers, und/oder eine Simulation der Funktionsweise des Getriebes (10) durchzuführen.
